# EUROPÄISCHE PATENTSCHRIFT

(11) **EP 1 293 547 B1**
(45) Veröffentlichungstag und Bekanntmachung des Hinweises auf die Patenterteilung: **07.02.2007**
(21) Anmeldenummer: 02018538.5
(22) Anmeldetag: 17.08.2002
(51) Int. Cl.: C09J 133/06

(54) **Verarbeitung von Acrylat-Hotmelts mittels reaktiver Extrusion**
Processing of acrylate hot melt adhesives via reactive extrusion
Procédé de préparation d'adhesifs acryliques thermofusibles par extrusion réactive

(30) Priorität: 13.09.2001 DE 10145229
(43) Veröffentlichungstag der Anmeldung: 19.03.2003
(73) Patentinhaber: tesa AG, 20253 Hamburg (DE)
(72) Erfinder: Husemann, Marc, Dr., 22605 Hamburg (DE); Zöllner, Stephan, Dr., 22043 Hamburg (DE)

(56) Entgegenhaltungen:
- EP-A- 0 458 164
- WO-A-01/96413
- US-A- 5 536 759
- US-A- 5 741 543

## Beschreibung

Die Erfindung betrifft ein Verfahren zur Herstellung und zur Funktionalisierung von Polyacrylat-Schmelzhaftklebemassen sowie die Verwendung derartiger Schmelzhaftklebemassen für Klebebänder.

Schmelzhaftkleber sind Verbindungen, die die Eigenschaften von Schmelzklebern mit den Eigenschaften von Haftklebemassen vereinigen. Schmelzhaftkleber schmelzen bei erhöhten Temperaturen und formen bei Abkühlung eine permanent klebrige Schicht, die bei Kontakt mit einem Substrat adhäsiv auffließt. In Kombination mit unterschiedlichen Substraten, wie z.B. Papier, Gewebe, Metall und Kunststofffilme, können eine Vielzahl unterschiedlicher Produkte, insbesondere Haftklebebänder sowie Etiketten, hergestellt werden. Diese Haftklebeprodukte haben einen weiten Anwendungsbereich in der Automobilindustrie, z.B. zur Befestigung oder zur Abdichtung, oder in der pharmazeutischen Industrie, z.B. für Wirkstoffpflaster.

Verfahren zur Herstellung solcher Schmelzhaftkleber (Heißschmelz- oder Hotmeltverfahren) sind daher industriell von anwachsender Bedeutung. Allgemein fördern Umweltauflagen und steigende Kosten diesen Entwicklungsprozeß. Neben SIS-Systemen (Styrol/Isopren/Styrol-Copolymere) werden zunehmend Acrylat-Polymere aus der Schmelze als Polymerschicht auf Trägermaterialien aufgetragen. Weiterhin werden für spezielle Anwendungen Haftklebebänder mit einem sehr geringen Ausgasungsverhalten benötigt. Dies kann nur durch Hotmeltverfahren gewährleistet werden, da konventionelle Beschichtungen aus der Lösung immer noch geringe Anteile an Restlösemittel enthalten.

Die typische Beschichtungstemperatur für Schmelzhaftkleber liegt zwischen 80 und 180°C. Um möglichst niedrige Beschichtungs- sowie Verarbeitungstemperaturen zu erreichen, sollte das Molekulargewicht des zu beschichtenden Schmelzhaftklebers möglichst niedrig sein.

Andererseits muß die Haftklebemasse auch eine gewisse Kohäsion aufweisen, damit bei Anwendung nicht das Haftklebeband vom Substrat abrutscht. Zur Erhöhung der Kohäsion ist daher ein hohes Molekulargewicht essentiell.

Durch die chemischen Charakter der zugrundeliegenden Haftklebemassen lassen sich deren Eigenschaften modifizieren. So können die Eigenschaften durch Veränderungen der chemischen Struktur der Poylmerketten oder auch durch Beimischung weiterer Komponenten beeinflußt werden.

Zur Funktionalisierung von Haftklebemassen stehen im Stande der Technik eine Reihe von Verfahren zur Verfügung.

So wurden beispielsweise Haftklebemassen entwickelt, die ein relativ geringes Molekulargewicht besitzen, aber Doppelbindungen entlang der Seitenketten enthalten. Diese Polymere, wie z. B. Polyesteracrylate oder Polyurethanacrylate, können mit UV- oder ionisierender Strahlung effizient über die Doppelbindungen vernetzt werden, haben aber allerdings nur begrenzte adhäsive Eigenschaften.
Bei Acrylathaftklebemassen werden zur Promotion der Vernetzung multifunktionelle Acrylate bzw. Methacrylate vor der Vernetzung hinzugegeben, die die Vernetzungsreaktivität erhöhen und damit auch die Kohäsion steigern, die aber nur über einen zweistufigen Mechanismus während der Bestrahlung (Anbindung an das Polymer und dann Vernetzungsreaktion über die noch freien Acrylatdoppelbindung) reagieren und somit eine geringe Vernetzungseffizienz aufweisen.
Das Prinzip der Funktionalisierung von Doppelbindungen durch Copolymerisation läßt sich nicht auf Acrylathaftkleber übertragen, da hier die entsprechenden Polyacrylate über freie radikalische Polymerisation hergestellt werden. Hierbei werden alle Doppelbindungen im Polymerisationsprozeß umgesetzt, oder es treten Vergelungen während der Polymerisation auf. Ein Beispiel hierfür wurde von Pastor dargestellt [US 4,234,662 A], der zur Polymerisation Allylacrylat bzw. Allylmethacrylat einsetzte. Ein zentrales Problem liegt aber in der Copolymerisation dieser Verbindungen, die in der Regel während des radikalischen Polymerisationsprozesses vergelen. Weiterhin sind aufgrund der relativ geringen Reaktivität der Allylgruppen im Hinblick auf eine Vernetzungsreaktion drastische Versuchsbedingungen notwendig, insbesondere hohe Temperaturen oder eine lange Bestrahlungsdauer. Für die Anwendung als vernetzte Haftklebemasse sind die allylmodifizierten Acrylatpolymere daher wenig geeignet.

Eine weitere Möglichkeit zur Funktionalisierung mit Doppelbindungen besteht durch polymeranaloge Reaktionen. Generell können polymeranaloge Reaktionen in Lösung oder aus der Schmelze durchgeführt werden. In der EP 0 608 981 B1 wird ebenfalls auf die Vergelungsproblematik mit Doppelbindungen hingewiesen. Dies wird durch diverse weitere polymeranaloge Umsetzungen unterstützt. So lassen sich Polyacrylate mit Carbonsäure-, Hydroxy-, Epoxid- und Amingruppen in einer polymeranalogen Reaktion mit Doppelbindungen enthaltenden Verbindungen umsetzen, siehe hierzu die US 4,665,106 A. Diese Reaktion konnte aber aufgrund der geringen thermischen Beständigkeit der beteiligten Komponenten nicht auf Hotmelts angewendet werden. Zudem ergaben sich unvorteilhafte Prozeßbedingungen aus der Tatsache, daß zur Vermeidung einer Vergelung große Mengen an Regler zum Polyacryat zugesetzt werden mußten.
Daher wurde für Acrylathotmelts in der US 5,536,759 A die Umsetzung von Hydroxy- oder Carbonsäuregruppen enthaltenden Polyacrylaten mit 1-(1-isocyanato-1-methyl ethyl)-3-(1-methyl ethenyl) benzol (m-TMI) in Lösung mit anschließender Hotmeltaufarbeitung beschrieben. Durch die Funktionalisierung mit den Doppelbindungen lassen sich die beschriebenen Polyacrylate sehr effizient mit UV-Licht vernetzen und somit Haftklebemassen mit einer hohen Kohäsion erzeugen. Nachteil dieses Verfahrens ist die hohe Toxizität der eingesetzten Isocyanate sowie das aufwendige zweistufige Verfahren, da erst in einem ersten Schritt die Polymerisation durchgeführt wird und in einem zweiten Schritt die polymeranaloge Reaktion in einem Reaktor durchgeführt werden muß. Zudem sind doppelbindungsfunktionalisierte Polyacrylate thermisch nicht sehr stabil und scherempfindlich.
Im US Patent 5,741,543 werden mit Doppelbindungen funktionalisierte Polyacrylate, die über eine polymeranaloge Reaktion hergestellt wurden, UV-vernetzt. Die Polymere wurden über die UV-Präpolymerisationstechnik hergestellt, dieses Verfahren weist die bekannten Nachteile wie langsame Prozeßgeschwindigkeiten und der freie Umgang von Monomeren auf.
In den US Patenten 3,786,116 , 3,832,423 und 3,862,267 werden Polyvinylchlorid oder Methacrylatester mit Polystyrol funktionalisiert, wobei dort aber keine Haftklebemassen beschrieben werden.

Im US Patent 4,693,776 wurde Acrylat- bzw. Methacrylat-funktionalisiertes Polystyrol mit Acrylatmonomeren copolymerisiert und Haftklebemasse insbesondere für Verklebungen auf der menschlichen Haut eingesetzt. Diese funktionalisierten Haftklebemassen lassen sich aber nur sehr schwer herstellen, da diese Makromonomere eine nur geringe Reaktivität aufweisen und sich somit nur zu relativ geringem Umsatz polymerisieren lassen. Diese Haftklebemassen lassen sich ebenfalls schlecht aufkonzentrieren, da nicht umgesetzte Restmonomere im Aufkonzentrationsprozess wieder entzogen werden und somit den Hotmelt-Prozess empfindlich stören.
Im US Patent 4,994,322 sind repositionierbare Acrylathaftklebemassen beschrieben, die wiederum durch Copolymerisation über Acrylat- oder Methacrylatfunktionalisierte Polystyrol hergestellt wurden. Zusätzlich enthalten diese Haftklebemassen microsphärische Partikel. Die in dem US Patent 4,693,776 enthaltenden Nachteile sind auch hier vorhanden.
In der EP 0 707 604 A1 werden Polyethylen/butylen Makromonomere zur Copolymerisation mit Acrylaten eingesetzt. Hierdurch bilden sich Phasen mit einer geringen Glasübergangstemperatur, die wiederum die Klebemassen auf unpolaren Oberflächen auffließen lassen und somit hohe Klebkräfte auf PE und PP gewährleisten. Nachteilig ist der schlechte Umsatz des beschriebenen Polymerisationsverfahrens.
In den Patenten US 5,614,586 und 5,674,275 werden klebrige Hydrogele beschrieben, die aus ethoxylierten Comonomeren hergestellt werden können. Die hergestellten Materialien sind repositionierbar, aber keine Haftkleber.

Dagegen werden die Nach- bzw. Vorteile der einzelnen Verfahren beschrieben [Chemie Ingenieur Technik (70), 1998, S. 560 - 566]: "Polymeranaloge Umsetzungen in der Schmelze machen zwei ansonsten getrennt voneinander ablaufende Prozesse möglich. Zuerst finden die Reaktion statt; da das Reaktionsmedium die Schmelze ist, kann schon während der Reaktion mit der formgebenden Verarbeitung durch Extrusion begonnen werden. Auf diesem Wege wird kein zusätzlicher Reaktionsbehälter und keinerlei Aufarbeitung benötigt. Das Fehlen des Lösungsmittels kompliziert allerdings den Reaktionsverlauf in vielerlei Hinsicht, z.B. durch Heterogenität der Reaktionsmischung und die relativ langsame Diffusion der Reaktanden zueinander."
Somit weist das in EP 0 608 981 B1 beschriebene Verfahren die prinzipiellen Nachteile einer polymeranalogen Umsetzung in Lösung auf. Wünschenswert wäre somit ein Verfahren für Acrylathaftklebemassen, das in der Schmelze polymeranaloge Umsetzungen zulässt.

Ein zentrales Problem liegt in der langsamen Diffusion der Reaktanden. Dieses läßt sich nur durch Erhöhung der Reaktionstemperaturen lösen, die die Reaktivität der einzelnen Komponenten zueinander verbessern. Hier unterliegt man aber für Acrylathaftklebemassen natürlichen Grenzen.

Daher werden für polymeranaloge Reaktionen aus der Schmelze in der Regel thermoplastische Materialien eingesetzt, die bei hohen Temperaturen verarbeitet und funktionalisiert werden. So werden z.B. Polystyrol-Maleinsäureanhydrid-Thermoplaste bei Temperaturen von 180 bis 200 °C umgesetzt [Chemie Ingenieur Technik (70), 1998, S. 560 - 566 und Chemie Ingenieur Technik (71), 1999, S. 1418 - 1421]. Weiterhin werden Polyester mit Maleinsäureanhydrid in der Schmelze zur Reaktion gebracht [Journal of Polymer Science: Part A: Polymer Chemistry, Vol. 37, 1693-1702 (1999)]. Beide Verfahren eignen sich aber nicht zur Funktionalisierung für Acrylathaftklebemassen mit Doppelbindungen. In Journal of Polymer Science: Part A: Polymer Chemistry, Vol. 37, 1693-1702 (1999) wird eine Funktionalisierung durch radikalische Pfropfung vorgenommen, die aber nicht zur Funktionalisierung mit Doppelbindungen verwendet werden kann, da die Vinylverbindungen sofort polymerisieren würden und somit nicht mehr zu einer nachträglichen Vernetzung auf dem Träger zur Verfügung stehen würden.
Im Stand der Technik werden Polymerisate eingesetzt [Chemie Ingenieur Technik (70), 1998, S. 560 - 566], die für Haftklebemassen zu hohe Glasübergangstemperaturen aufweisen, die bei Übertrag auf Acrylathaftklebemassen zu hohe Reaktionstemperaturen aufweisen würden (bei den angewendeten hohen Temperaturen treten bereits starke Verfärbungen des Polymers auf durch Reaktionen durch z.B. nach dem Polymerisationsprozess verbliebenen thermisch zerfallenden Initiatoren oder durch die Zersetzung von einzelnen Copolymeren, wie z.B. tert.-Butylacrylat, bei oberhalb 160 °C, sowie sehr hohe Anteile copolymerisiertes Maleinsäureanhydrid besitzen, welches die Glasübergangstemperatur sehr hoch setzt.

Aufgabe der Erfindung ist es, ein Verfahren zur Herstellung von Haftklebemassen auf Acrylatbasis zur Verfügung zu stellen, welche bei Raumtemperatur ein viskoelastisches Verhalten aufweisen und welche die Nachteile des Standes der Technik nicht aufzeigen. Dabei soll eine Vergelung der Haftklebemassen während eines Hotmeltprozesses verhindert werden. Das Verfahren soll geeignet sein, auf einfache und elegante Weise eine breite Palette an Schmelzhaftklebemassen mit unterschiedlichen Eigenschaften für eine breite Anwendungspalette zur Verfügung zu stellen.

Die Aufgabe wird überraschend und für den Fachmann nicht vorhersehbar gelöst durch ein Verfahren, wie es im Hauptanspruch dargestellt wird. Die weiteren Ansprüche betreffen vorteilhafte Weiterentwicklungen dieses Verfahrens, die derart hergestellte Haftklebemasse sowie eine Verwendung dieser Haftklebemasse.

Die Verwendung betrifft demgemäß ein Verfahren zur Herstellung von Polyacrylat-Schmelzhaftklebemassen, welches die folgenden Verfahrensschritte beinhaltet:
(a) Compoundierung
   einer Acrylatschmelzhaftklebemasse, enthaltend zumindest eine funktionelle Gruppe X, mit einem Lösemittelgehalt von nicht mehr als 0,5 Gew.-% und einer Molekularmasse M_{w} von 100.000 bis 2.000.000 g/mol,
   mit zumindest einer chemischen Substanz R-Y, enthaltend zumindest eine funktionelle Gruppe Y,
   wobei die zumindest eine funktionelle Gruppen X und die zumindest eine funktionelle Gruppe Y derart gewählt sind, daß sie in der Lage sind, eine Kopplungsreaktion miteinander einzugehen,
(b) Behandlung des Compounds in einem Reaktor mit einer Vermischungsvorrichtung bei einer spezifischen Antriebsenergie von nicht mehr als 0,09 kWh/kg und bei einer Temperatur von 80 bis 200 °C,
(c) Übergabe der derart behandelten Selbsthaftklebemasse an eine nachfolgende Beschichtungseinheit sowie deren Beschichtung aus der Schmelze auf ein Trägermaterial.

Die Bezeichnung "Herstellung" soll hierbei die Funktionalisierung und Weiterverarbeitung von bereits vorliegenden Haftklebemassen zu dem gewünschten Endprodukt mit beinhalten.
Die Behandlung des Compounds im Reaktor wird dabei derart durchgeführt, daß eine Kopplungsreaktion zwischen der zumindest einen funktionellen Gruppe X der Acrylatschmelzhaftklebemasse und der zumindest einen funktionellen Gruppe Y der zugegebenen chemischen Substanz stattfindet. Dabei wird die chemische Substanz R-Y bevorzugt derart an die Polymermoleküle der Acrylatschmelzhaftklebemasse angeknüpft, daß die Reste R danach als Seitenketten der Polymermoleküle vorliegen.

In diesem Sinne beinhaltet die Bezeichnung "Kopplungsreaktion" insbesondere Additions- und Substitutionsreaktionen (insbesondere Ver- und Umesterungsteaktionen), wobei bei den Substitutionsreaktionen ganze Gruppen oder Teile abgespalten werden können.
Das Verfahren erlaubt die Einführung funktioneller Gruppen in die Polymere, welche für spätere Anwendungen, zur Modifizierung der Eigenschaften der Schmelzhaftklebemasse oder für kontrollierte Folgereaktionen, beispielsweise eine effiziente Vernetzung unter milden Bedingungen, zur Verfügung stehen, ohne daß die funktionellen Gruppen während des Polymerisationsprozesses verbraucht oder anderweitig umgesetzt werden oder ihre Funktionalität verlieren.

Dabei ist es auf elegante Weise möglich, durch Wahl unterschiedlicher Reste R eine gezielte Modifizierung der Haftklebemasse bereits im Herstellprozeß durchzuführen. Hierfür bietet es sich an, wenn die chemische Substanz R-Y gegebenenfalls eine oder mehrere weitere funktionelle Gruppen Z aufweist, welche zum erwünschten Resultat für die Selbsthaftklebemasse beitragen.
Durch die Einführung der mit zumindest einer weiteren funktionellen Gruppe Z versehenen chemischen Substanz R-Y nach bereits erfolgter Polymerisation behalten diese weiteren funktionellen Gruppen Z ihre Reaktivität auch nach dem Einbau an die Polymerketten. Funktionelle Gruppen, welche beispielsweise für die Vernetzungsreaktion eine hohe Effizienz aufweisen, können derart in die Polymere eingeführt werden, auch wenn diese funktionellen Gruppen bei einer radikalischen Polymerisation ihre Funktionalität verlieren würden.

Die mittleren Molekulargewichte (Gewichtsmittel M_{w}) der bei der freien radikalischen Polymerisation entstehenden Haftklebemassen werden derart gewählt, daß sie in einem für Polyacrylatmassen üblichen Bereich, also zwischen 100.000 und 2.000.000 liegen; speziell für die Verwendung als Schmelzhaftkleber werden Haftklebemassen mit mittleren Molekulargewichten (Gewichtsmittel M_{w}) von 100.000 bis 800.000, mehr bevorzugt von 100.000 bis 400.000 g/mol hergestellt. Die Polymerisation kann in Gegenwart eines organischen Lösungsmittels, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Im Idealfall werden Substanzpolymerisationen ohne Lösungsmittelzusätze durchgeführt. Die Polymerisationszeit beträgt - je nach Umsatz und Temperatur - zwischen 6 und 48 Stunden. Je höher die Reaktionstemperatur gewählt werden kann, das heißt, je höher die thermische Stabilität des Reaktionsgemisches ist, desto geringer kann die Reaktionsdauer gewählt werden.

Eine Weiterentwicklung des erfinderischen Verfahrens zeichnet sich dadurch aus, daß dem Compoundierungsschritt ein Aufkonzentrationsprozeß vorangeht, bei welchem der Lösemittelgehalt der Polyacrylatmasse auf einen Restlösemittelgehalt von nicht mehr als den geforderten 0,5 Gew.-% gesenkt wird. Für die Aufkonzentration eigenen sich insbesondere Vent-Extruder, beispielsweise Ein- oder Zweischneckenextruder, wobei der Zweischneckenextruder gleich- oder gegenläufig betrieben werden kann.

Es ist insbesondere im Sinne der Erfindung von Vorteil, das Verfahren dergestalt zu betreiben, daß die Zugabe der chemischen Substanz R-Y und die Behandlung des Compounds in einem Reaktor mit Vermischungsvorrichtung direkt nach dem Aufkonzentrationsschritt erfolgt.

Nach dem Einsatz der bereits zuvor lösungsmittelarmen Haftklebemasse oder der Aufkonzentration erfolgt die Zugabe der chemischen Substanz R-Y, bevorzugt durch Zudosierung. Zweckmäßigerweise geschieht dies bereits in dem zur späteren oder gleichzeitigen Durchführung der Kopplungsreaktion verwendeten Reaktor (Extruder beziehungsweise im Cokneter), bevorzugt durch Zudosierung. In einer weiteren Ausgestaltung des erfinderischen Verfahrens kann die Zugabe auch in einer anderen Mischvorrichtung erfolgen. Hierzu eignen sich beispielsweise ebenfalls Zweischneckenextruder, aber auch Ringextruder oder alle weiteren dem Fachmann geläufigen Mischaggregate.
In einer sehr vorteilhaften Weiterentwicklung der Erfindung finden, wie bereits vorstehend dargestellt, die Compoundierung und die Behandlung (Reaktionsführung) in demselben Reaktor statt, vorteilhaft in einem Extruder. Dies kann der Extruder sein, in dem bereits der Aufkonzentrationsschritt durchgeführt wurde.
Als für die Reaktion sehr geeignet haben sich ein Doppelschneckenextruder (z.B. Werner & Pfleiderer oder Welding Engineers) oder ein Cokneter (z.B. Buss) herausgestellt (reaktive Extrusion). In dem Reaktor werden durch Verfahrenslänge, Durchsatz (Drehzahl), Knettemperatur und Menge eventuell eingesetzter Katalysatoren die optimalen Reaktionsbedingungen eingestellt. Durch gute Vermischung der Reaktionskomponenten läßt sich die Verweilzeit im Reaktor optimieren. Weiterhin sollte die Schneckengeometrie des Extruders relativ scherarm gewählt werden, um Vergelungen im Prozeß zu vermeiden. Es ist von besonderem Vorteil für das erfinderische Verfahren, wenn die spezifische Antriebsenergie des Reaktors weniger als 0,06 kWh/kg beträgt.
Entsprechend der Fließviskosität des eingesetzten Polyacrylates verläuft die Reaktion bei erhöhten Temperaturen. Die Temperaturen werden zwischen 80 und 200 °C gewählt, in einem besonders bevorzugten Bereich zwischen 110 und 160 °C.
Für das erfindungsgemäße Verfahren kann es ebenfalls von Vorteil sein, das Molekulargewicht zu variieren und die Verarbeitbarkeit in der Schmelze zu verbessern. So läßt sich z.B. durch Reduktion des Molekulargewichtes die Fließviskosität herabsetzen und somit die Reaktionsfreudigkeit erhöhen. Ein weiterer Punkt ist die Verarbeitbarkeit unter Scherung im Extruder, da niederviskosere und niedermolekulare Haftklebemassen leichter im Extruder verarbeitbar sind und die eingebrachte Scherung somit stark reduziert wird.

Es ist für das erfinderische Verfahren insgesamt von Vorteil, einen kontinuierlichen Verfahrensablauf zu wählen und/oder einzelne Schritte hiervon im In-line-Prozeß zu betreiben. Möglich ist aber auch die diskontinuierliche Verfahrensführung.

Die Beschichtung der Selbsthaftklebemasse auf das Trägermaterial erfolgt gelfrei ("gelfrei" bedeutet die Erfüllung der Anforderungen für eine Beschichtbarkeit der Massen mit den üblicherweise verwendeten und dem Fachmann für diese Zwecke geläufigen Beschichtungsapparaturen). Dabei wird bevorzugt derart vorgegangen, daß die Verweilzeit zwischen der Reaktion (der Behandlung im Reaktor) und der Beschichtung nicht mehr als 10 Minuten beträgt.
Für die Beschichtung werden bevorzugt Schmelzdüsen oder Extrusionsdüsen mit einer Spaltbreite von 100 bis 500 µm, mehr bevorzugt von 150 bis 300 µm eingesetzt. Als Trägermaterial lassen sich hierbei die dem Fachmann geläufigen und üblichen Materialien, wie Folien (Polyester, PET, PE, PP, BOPP, PVC), Vliese, Schäume, Gewebe und Gewebefolien sowie gegebenenfalls Trennpapier (beispielsweise Glassine, HDPE, LDPE) verwenden. Diese Aufzählung soll nicht abschließend sein.

Nach der Beschichtung auf das Trägermaterial erfolgt vorteilhaft eine Vernetzung der funktionalisierten Polyacrylat-Schmelzhaftklebemasse. Im Falle einer Vernetzung der Haftklebemasse wird diese bevorzugt mit actinischer Bestrahlung behandelt, es kann jedoch auch chemisch vernetzt werden. Die Vernetzung der erfindungsgemäßen Schmelzhaftklebemassen erfolgt vorteilhaft durch kurzzeitige UV-Bestrahlung im Bereich von 200 bis 400 nm mit handelsüblichen Quecksilber-Hochdruck oder Mitteldrucklämpen mit einer Leistung von z.B. 80 bis 240 W/cm oder durch thermische Vernetzung in einem Temperaturbereich zwischen 70 und 160 °C oder durch ionisierende Strahlung, wie z.B. durch Elektronenstrahlhärtung. Für die UV-Vernetzung kann es angebracht sein, die Strahlerleistung der Bahngeschwindigkeit anzupassen oder die Bahn bei Langsamfahrt teilweise abzuschatten, um ihre thermische Belastung zu verringern. Die Bestrahlungszeit richtet sich nach Bauart und Leistung der jeweiligen Strahler.
Verbliebene, nicht im Hotmelt-Prozeß bzw. der reaktiven Extrusion umgesetzte Monomere oder sonstige polymerisierbare Doppelbindungen enthaltende Verbindungen können bei der Vernetzung mit den während der Vernetzung gebildeten Radikalen umgesetzt werden und werden in diesem Falle an das Polymer gebunden, so daß sie zu einem späteren Zeitpunkt nicht mehr aus dem Haftklebeband entweichen können.

Die Kopplungsreaktionen zwischen den funktionellen Gruppen X der Acrylatschmelzhaftklebemasse und den funktionellen Gruppen Y der chemischen Substanz R-Y können insbesondere sowohl Additions- als auch Substitutionsreaktionen darstellen.

Auf folgenden Reaktionen soll in diesem Zusammenhang besonders hingewiesen werden, die Liste ist jedoch nicht abschließend und soll lediglich dazu dienen, das erfinderische Verfahren anhand einiger beispielhafter Kopplungsreaktionen näher zu erläutern:

| Polymerseitige Gruppe X- | Gruppe Y- in chemischer Substanz R-Y | Reaktionstyp |
|---|---|---|
| Anhydrid- | Hydroxy-, Alkoxy-, Mercapto-, Thioether-, Isocyanat-, Amino-, Oxazol-, ... | Addition |
| Säure- Ester- | Hydroxy- Amino- | Um- und Veresterungen (Substitution) |
| Hydroxy- Säure- | Isocyanat- | Addition |

In einer für das erfinderische Verfahren sehr vorteilhaften Vorgehensweise werden als funktionelle Gruppen X Carbonsäureanhydridgruppen eingesetzt; dies können auch gemischte Anhydride sein. Als Acrylatschmelzhaftklebemasse lassen sich in diesem Sinne beispielsweise hervorragend Polyacrylate verwenden, welche aus der folgenden Monomerzusammensetzung hergestellt sein können:
- Acryl- und Methacrylsäure-Monomere der folgenden Struktur 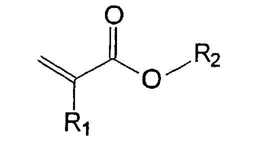 mit R₁ = H oder CH₃
   und R₂ = eine Alkylkette mit 2 - 20 C-Atomen
   mit einem Anteil von 45 - 99,5 Gew.-% am Monomergemisch,
- ein oder mehrere Carbonsäureanhydride, welche olefinische Doppelbindungen enthalten, mit einem Anteil von 0,5 - 25 Gew.-% am Monomergemisch, mehr bevorzugt mit einem Anteil von 1 - 5 Gew.-% am Monomergemisch.

Weiterhin können der Monomermischung alle olefinisch ungesättigten Monomere, welche als Copolymere für Acrylathaftklebemassen bekannt sind, zugegeben werden. Hier sei auf den dem Fachmann geläufigen Stand der Technik verwiesen, beispielsweise Donatas SATAS, "Handbook of Pressure Sensitive Adhesive Technology", van Nostrand, New York 1989.

Die Auswahl der chemischen Substanz R-Y richtet sich in Hinblick auf die funktionelle Gruppe Y auf die chemische Art der Kopplungsreaktion und in Hinblick auf den Rest R auf die gewünschten Modifizierungen der Haftklebemasse. Dabei können auch mehrere unterschiedliche chemische Substanzen R-Y, welche unabhängig voneinander gewählt werden, eingesetzt werden.

Wird als Gruppe X der Acrylatschmelzhaftklebemasse eine Carbonsäureanhydridgruppe gewählt, so lassen sich im erfinderischen Sinne vorteilhaft solche Substanzen R-Y einsetzen, die funktionelle Gruppen Y enthalten, die direkt oder unter Katalyse mit dem Carbonsäureanhydrid reagieren können, insbesondere im Sinne einer Verknüpfungsreaktion und/oder einer polymeranalogen Reaktion.

Die funktionelle Gruppe Y kann insbesondere eine Hydroxyfunktion sein, bevorzugt eignen sich hydroxyterminierte Verbindungen. Als weitere geeignete funktionelle Gruppen selen hier beispielhaft und ohne sich durch die Aufzählung unnötig beschränken zu wollen die folgenden genannt:
Alkoxygruppen, Mercaptogruppen, Thioethergruppen, Isocyanatgruppen, unsubstituierte und substituierte Aminogruppen, Oxazol sowie dessen Derivate und/oder unsubstituierte oder substituierte Amidogruppen, aber auch alle anderen im oben geschilderten Sinne mit Carbonsäureanhydriden reagierenden funktionellen Gruppen.

Der molare Anteil der zugegebenen chemischen Substanz R-Y entspricht vorteilhaft der molaren Menge der in die Polyacrylatkette einpolymerisierten funktionellen Gruppen X (beispielsweise den Carbonsäureanhydridgruppen), kann aber auch kleiner oder größer als diese gewählt werden.
Die molare Menge der chemischen Substanz R-Y wird sehr bevorzugt derart gewählt, daß das molare Verhältnis der Zahl n_{Y} der funktionellen Gruppen Y der chemischen Substanz R-Y zu der Zahl n_{X} der einpolymerisierten funktionellen Gruppen X (insbesondere Carbonsäureanhydrideinheiten) n_{Y}/n_{X} in einem Größenbereich zwischen 0,8 und 1,2 liegt, sehr bevorzugt zwischen 0,8 und 1 liegt, also n_{Y}/n_{X} ≤ 1 ist. Bei trägen Reaktionsverläufen ist es günstig, die chemische Substanz R-Y in solchen Mengen einzusetzen, daß die funktionellen Gruppen X, bezogen auf die funktionellen Gruppen Y, im Überschuß vorliegen, um eine möglichst weitgehende Umsetzung der Verbindung R-Y zu gewährleisten. Dabei kann es vorteilhaft sein, n_{Y}/n_{X} sehr viel kleiner als 1 zu wählen.

Es sei hier darauf hingewiesen, daß, sofern dies im folgenden nicht gesondert aufgeführt wird, die vorstehend als Y definierten Gruppen auch im Sinne der Gruppen X der Schmelzhaftklebmasse vorliegen können und die vorstehend als X definierten funktionellen Gruppen dann entsprechend der Gruppen Y der chemischen Substanz R-Y dienen. Das vorstehend gesagte gilt dann entsprechend in umgekehrter Weise.

Im folgenden werden einige Beispiele für Verbindungsklassen dargestellt, welche sich hervorragend als chemischen Substanzen R-Y für das erfinderische Verfahren einsetzen lassen und zu bevorzugten Acrylatschmelzhaftklebemassen führen. Günstig eingesetzte Substanzen können dabei auch mehreren der nachstehend genannten oder weiteren chemischen Verbindungstypen zugeordnet sein.

Um eine gute und effiziente Vernetzung der Polymere zu gewährleisten, werden beispielsweise in hervorragender Weise Vinylgruppen oder noch bevorzugter Acrylat- oder Methacrylatgruppen als chemische Substanzen R-Y eingesetzt, diese auch in Form ihrer substituierten Derivate.
Demzufolge werden vorteilhaft im Sinne des Erfindungsgedankens Hydroxygruppen enthaltende Acrylate, wie sehr bevorzugt z.B. 2-Hydroxyethylacrylat (2-HEA, Acrylsäure-2-hydroxyethylester), Hydroxypropylacrylat (Acrylsäure-3-hydroxypropylester) und Hydroxygruppen enthaltende Methacrylate, wie z.B. 2-Hydroxyethylmethacrylat (2-HEMA, Methacrylsäure-2-hydroxyethylester), Hydroxypropylmethacrylat (Methacrylsäure-3-hydroxypropylester) eingesetzt, und/oder Vinylverbindungen, wie z. B. 1-Decenol, Oxazoline, wie z.B. Ricinenalkyloxazolin oder Sojaalkyloxazolin, Acrylamide, wie z.B. Butoxymethylacrylamid, oder substituierte Aminoverbindungen, wie z.B. tert.-Butylaminoethylmethacrylat.

Eine weitere günstige Ausführung des erfinderischen Verfahrens verwendet Oligomere oder Polymere als chemische Substanzen R-Y, welche eine statische Glasübergangstemperatur von höchstens 0 °C besitzen. Das Molekulargewicht M_{w} dieser Verbindungen beträgt vorteilhaft zwischen 1.000 und 30.000 g/mol, sehr bevorzugt zwischen 1.000 und 15.000 g/mol.
Besonders bevorzugt werden hier Ethylen/Butylen- oder Ethylen/Propylen-Copolymere eingesetzt

Als chemische Substanzen R-Y lassen sich weiterhin in günstiger Vorgehensweise Polymere einsetzen, deren statische Glasübergangstemperatur mindestens 50 °C beträgt. Auch hier liegt das Molekulargewicht M_{w} bevorzugt in einem Bereich von 1.000 bis 30.000 g/mol, sehr bevorzugt zwischen 1.000 und 15.000 g/mol. Hier lassen sich beispielhaft Polystyrol oder Polymethylmethacrylat nennen.

In einer weiteren sehr vorteilhaften Variante des erfinderischen Verfahrens werden als chemische Substanzen R-Y funktionalisierte Oligo- oder Poly(alkenylglycol)monoalkylether eingesetzt. Es handelt sich bevorzugt um Verbindungen der allgemeinen chemischen Formel 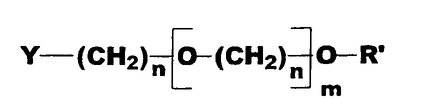 wobei Y die bereits eingeführte Bedeutung besitzt, n ≥ 1 und m ≥ 2 ist und R' einen aliphatischen Kohlenwasserstoffrest mit mindestens einem Kohlenstoffatom repräsentiert. Besonders bevorzugte Beispiele sind hier Poly(ethylenglycol)monomethylether, Poly(ethylenglycol)monobutylether, Poly(propylenglycol)monobutylether, Poly(propylenglycol)monoethylether. Es können aber auch Gemische aus unterschiedlichen Poly(alkenylglycol)monoalkylethern eingesetzt werden sowie auch dem Fachmann bekannten Blockcopolymere mit entsprechender Struktur, wie Poly(propylenglycol)-block-poly(ethylenglycol)-monoalkenylether.

In entsprechender Weise können durch das erfinderische Verfahren Photoinitiator-Moleküle in Polyacrylat-Schmelzhaftklebemassen eingebaut werden, wenn die Photoinitiatoren zuvor mit einer wie vorstehend dargelegten Gruppe Y modifiziert werden.

In einer für das Verfahren sehr günstiger Vorgehensweise werden Katalysatoren zur Steigerung der Reaktivität hinzugegeben. Der Anteil des Katalysators beträgt zwischen 0,01 und 5 Mol-%, bevorzugt aber zwischen 0,1 und 0,5 Mol-%, bezogen auf den molaren Anteil der funktionellen Gruppen X in der Schmelzhaftklebemasse (vor der Kopplungsreaktion).
Die Reaktion verläuft besonders bevorzugt unter Säure- oder Basenkatalyse. Als Säuren lassen sich alle Lewis-aciden Verbindungen einsetzen. Bevorzugt läuft die Reaktion mit p-Toluolsulfonsäure, Itakonsäure, Dibutylzinnoxid oder mit Natriumacetat. Als Basen lassen sich alle Lewis-Basen einsetzen. Bevorzugt läuft die Reaktion unter 4-Vinylanilin-Katalyse.

Die Compoundierung, also die Zugabe weiterer Additive, kann generell ebenfalls in derselben Apparatur wie die bisherigen Schritte, in einem weiteren Extruder oder in einem Compounder durchgeführt werden, hier kann auch eine zusätzliche Durchmischung der Polymermasse erfolgen.

Zur Herstellung der Klebebänder werden die oben beschriebenen Polymere optional mit Vernetzern abgemischt: Geeignete Vernetzersubstanzen in diesem Sinne sind bi- oder multifunktionelle Acrylate, bi- oder multifunktionelle Isocyanate oder bi- oder multifunktionelle Epoxide. Verwendet werden können hier aber auch alle weiteren, dem Fachmann geläufigen bi- oder multifunktionellen Verbindungen, die in der Lage sind, Polyacrylate zu vernetzen.

Für die Vernetzung mit ultravioletter Strahlung werden Photoinitiatoren eingesetzt. Als Photoinitiatoren seien, ohne sich unnötig beschränken zu wollen, beispielsweise genannt spaltende (radikalbildende) Photoinitiatoren, insbesondere α-Spalter, und Wasserstoffabstraktoren. Zur Gruppe der photospaltenden Initiatoren seien bespielhaft genannt aromatische Carbonylverbindungen, insbesondere Benzoinderivate, Benzilketale und Acetophenonderivate. Zu den H-Abstraktoren gehören beispielsweise aromatische Ketone, wie z. B. Benzophenon, Benzil, Thioxanthone.

Weiterhin werden zur Herstellung von Haftklebemassen diese Elastomere optional mit zumindest einem Harz abgemischt. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen. Auf die Darstellung des Wissensstandes im "Handbook of Pressure Sensitive Adhesive Technology" von Donatas Satas (van Nostrand, 1989) sei ausdrücklich hingewiesen.

Die Acrylathotmelts können des weiteren mit einem oder mehreren Additiven wie Alterungsschutzmitteln, Lichtschutzmitteln, Ozonschutzmitteln, Fettsäuren, Harzen, Weichmachern, Keimbildnern, Blähmitteln und Beschleunigern abgemischt sein. Als Alterungsschutzmittel können sowohl primäre als auch sekundäre Alterungsschutzmittel sowie Lichtschutzmittel auch in Kombination miteinander eingesetzt werden. Hier soll nur an dieser Stelle auf die entsprechenden Irganox™ Typen der Fa. Ciba Geigy bzw. Hostanox™ der Firma Clariant verwiesen werden. Als weitere hervorragende Mittel gegen Alterung können Phenothiazin (C-Radikalfänger) sowie Hydrochinonmethylether in Gegenwart von Sauerstoff sowie Sauerstoff selbst eingesetzt werden.
Weiterhin können die Schmelzhaftklebemassen mit einem oder mehreren Füllstoffen wie Fasern, Ruß, Zinkoxid, Titandioxid, Mikrovollkugeln, Voll- oder Hohlglaskugeln, Kieselsäure, Silikaten und Kreide gefüllt sein, wobei auch der Zusatz von blockierungsfreien Isocyanaten möglich ist.

Weiterhin betrifft die Erfindung die Verwendung einer wie vorstehend beschrieben funktionalisierten Polyacrylat-Schmelzhaftklebemasse für ein Klebeband, wobei die Polyacrylat-Schmelzhaftklebemasse ein- oder beidseitig auf einen Träger aufgetragen ist.

### Beispiele

Die im folgenden dargestellten Beispiele sollen das erfinderische Verfahren näher erläutern, ohne sich hierdurch unnötig beschränken zu wollen.

### Testmethoden

### Gelpermeationschromatographie (Test A)

Die Bestimmung des mittleren Molekulargewichtes M_{W} und der Polydispersität PD erfolgte durch die Firma Polymer Standards Service in Mainz. Als Eluent wurde THF mit 0,1 Vol.-% Trifluoressigsäure eingesetzt. Die Messung erfolgte bei 25 °C. Als Vorsäule wurde PSS-SDV, 5 µ, 10³ Å, ID 8,0 mm x 50 mm verwendet. Zur Auftrennung wurden die Säulen PSS-SDV, 5 µ, 10³ sowie 10⁵ und 10⁶ mit jeweils ID 8,0 mm x 300 mm eingesetzt. Die Probenkonzentration betrug 4 g/l, die Durchflußmenge 1,0 ml pro Minute. Es wurde gegen PMMA- oder Polystyrolstandards gemessen.

### Bestimmung des Gelanteils (Test B)

Die sorgfältig getrockneten lösungsmittelfreien Klebstoffproben werden in ein Vliestütchen aus Polyethylen (Tyvek-Vlies) eingeschweißt. Aus der Differenz der Probengewichte vor der Extraktion und nach der Extraktion durch Toluol wird der Gelwert als prozentuale Angabe des Gewichtsanteil des Polymers, der nicht in Toluol löslich ist, bestimmt.

### IR-Spektroskopie (Test C)

Zur Messung wurde das FT-IR IFS 45 Spektrometer der Fa. Bruker eingesetzt. Zunächst wurde mit verschiedenen Konzentrationen der einzelnen Carbonsäureanhydride eine Eichgerade erstellt. Zur Bestimmung des Umsatzes der entsprechenden Anteile Carbonsäureanhydride wurde der prozentuale Abfall der CO-Bande gemessen.

### Polystyrol P-1:

In einem 1 L Dreihalskolben, ausgestattet mit einem Septum, einem Kühler, einem Thermometer, einem Argon-Einleitungsrohr und einem Magnetrührer, wurden 800 ml reines und trockenes Cyclohexan (Fa. Aldrich; 99,5 % wasserfrei) eingefüllt. Unter Argonstrom wurde unter Erhitzen 50 ml Cyclohexan abdestilliert. Eingesetztes Styrol (Fa. Aldrich, 99+ %) wurde über 70 mesh Kieselgel unter Argon filtiert und anschließend 33 ml von diesem Styrol über eine Edelstahlspritze durch das Septum in den Dreihalskolben überführt. Zur Cyclohexan/Styrol-Mischung wurde tropfenweise sec.-Butyllithium (1,4 molar, Fa. Aldrich) hinzugegeben, bis sich eine leicht gelbe Farbe einstellte. Dabei blieb die Temperatur der Reaktionslösung unterhalb 50 °C. Anschließend wurden 4,25 ml sec.-Butyllithium (1,4 molar, Fa. Aldrich) rasch durch das Septum mittels einer Spritze hinzugegeben. Die rasch einsetzende Reaktion wurde dadurch kontrolliert, daß die Temperatur der Reaktionslösung bei 65 °C gehalten wurde. Die Polymerisation war nach einer Stunde beendet und die Reaktionslösung kühlte auf 35 °C ab. Das orange/gelbe Polystyrollithium wurde dann mit einem Überschuß Ethlenoxid in der Kälte abgefangen und dann mit 0.5 N wässriger HCI-Lösung hydrolisiert. Anschließend wurde das Polymer langsam in Methanol gefällt und über Nacht in einem in einem Vakuum-Trockenschrank vom Lösemittel befreit. Test A ergab für das Polymer ein mittleres Molekulargewicht (M_{W}) von 4.100 g/mol bei einer Polydispersität PD von 1,20.

### Beispiel 1

Ein für radikalische Polymerisationen konventioneller Reaktor wurde mit 8 kg Acrylsäure, 48 kg NTBAM, 8 kg Maleinsäureanhydrid, 368 kg 2-Ethylhexylacrylat, 368 kg n-Butylacrylat und 600 kg Aceton/Isopropanol (97:3) befüllt. Nach 45 Minuten Durchleiten von Stickstoffgas unter Rühren wurde der Reaktor auf 58 °C hochgeheizt und 400 g Vazo 67™ (Fa. DuPont) hinzugegeben; bei Vazo 67™ handelt es sich um 2,2'-Azo-bis(2-ethylpropionsäurenitril). Anschließend wurde das äußere Heizbad auf 75 °C erwärmt und die Reaktion konstant bei dieser Außentemperatur durchgeführt. Nach 1 h Reaktionszeit wurden wiederum 400 g Vazo 67™ (Fa. DuPont) hinzugegeben. Die Reaktion wurde nach 48 h Reaktionszeit abgebrochen und auf Raumtemperatur abgekühlt. Es wurde nach Testmethode A ausgetestet. Das mittlere Molekulargewicht M_{W} betrug 785.000 g/mol.

### Beispiel 2

Die Klebemasse aus Beispiel 1 wurde vom Lösungsmittel im Aufkonzentrationsextruder (W&P ZSK 58, L = 40 D) befreit. Das Vakuum der Rückwärtsentgasung betrug 250 mbar, die 3 Vakuumstufen wurden mit 300, 250 und 6 mbar betrieben. Die Eintrittstemperatur der Polymerlösung betrug 110 °C. Die Drehzahl wurde auf 185 Umdrehungen pro Minute eingestellt, so daß der Extruder dabei mit einer spezifischen Antriebsenergie von 0,12 kWh/kg betrieben wurde. Der Durchsatz lag bei 110 kg/h Speiselösung entsprechend 51 kg/h Konzentrat. Als Austrittstemperatur wurden 117 °C gemessen.

### Beispiel 3

Der Acrylathotmelt aus Beispiel 2 wurde an einen zweiten Doppelschneckenextruder der Fa. Welding Engineers übergeben (30 mm D.W.D.) Die Eintrittstemperatur des Acrylathotmelts betrug 115 °C. Im Welding Extruder wurde das Konzentrat mit 0,82 kg/h Hydroxypropylacrylat compoundiert. Der Extruder wurde mit einer Drehzahl von 400 Umdrehungen pro Minute bei einer spezifischen Antriebsenergie von 0,018 kWh/kg betrieben. Der Gesamtdurchsatz lag bei 40 kg/h. Die Austrittstemperatur lag bei 145 °C. Zur Analyse wurde Testmethode C durchgeführt. Der Umsatz nach dem IR betrug größer 90 %.
Der Acrylathotmelt wurde anschließend zu einer Breitschlitzdüse weitergeleitet und dann bei einer Beschichtungstemperatur von 135 °C mit 50 g/m² auf eine mit Saran geprimerte 23 µm dicke PET-Folie beschichtet. Nach der Bestrahlung der Beschichtung wurde der Gelwert nach Testmethode B bestimmt. Der Gelwert lag bei 0.

### Beispiel 4

Der Acrylathotmelt aus Beispiel 2 wurde an einen zweiten Doppelschneckenextruder der Fa. Welding Engineers übergeben (30 mm D.W.D.) Die Eintrittstemperatur des Acrylathotmelts betrug 115 °C. Im Welding Extruder wurde das Konzentrat mit 4 kg/h Poiystyroi P-1 compoundiert. Der Extruder wurde mit einer Drehzahl von 200 Umdrehungen pro Minute bei einer spezifischen Antriebsenergie von 0,009 kWh/kg betrieben. Der Gesamtdurchsatz lag bei 20 kg/h. Die Austrittstemperatur lag bei 155 °C. Die Verweilzeit wurde durch ein folgendes Rohrleitsystem auf 4 min bei 160 °C erhöht. Zur Analyse wurde Testmethode C durchgeführt. Der Umsatz nach dem IR betrug 58 %.
Der Acrylathotmelt wurde anschließend zu einer Breitschlitzdüse weitergeleitet und dann bei einer Beschichtungstemperatur von 185 °C mit 50 g/m² auf eine mit Saran geprimerte 23 µm dicke PET-Folie beschichtet. Nach der Bestrahlung der Beschichtung wurde der Gelwert nach Testmethode B bestimmt. Der Gelwert lag bei 0.

### Beispiel 5

Der Acrylathotmelt aus Beispiel 2 wurde an einen zweiten Doppelschneckenextruder der Fa. Welding Engineers übergeben (30 mm D.W.D.) Die Eintrittstemperatur des Acrylathotmelts betrug 115 °C. Im Welding Extruder wurde das Konzentrat mit 0,75 kg/h Poly-(ethylenglykol)-butylether (Mₙ = 350) compoundiert. Der Extruder wurde mit einer Drehzahl von 200 Umdrehungen pro Minute bei einer spezifischen Antriebsenergie von 0,009 kWh/kg betrieben. Der Gesamtdurchsatz lag bei 20 kg/h. Die Austrittstemperatur lag bei 155 °C. Die Verweilzeit wurde durch ein folgendes Rohrleitsystem auf 4 min bei 165 °C erhöht. Zur Analyse wurde Testmethode C durchgeführt. Der Umsatz nach dem IR betrug 47 %.
Der Acrylathotmelt wurde anschließend zu einer Breitschlitzdüse weitergeleitet und dann bei einer Beschichtungstemperatur von 135 °C mit 50 g/m² auf eine mit Saran geprimerte 23 µm dicke PET-Folie beschichtet. Nach der Bestrahlung der Beschichtung wurde der Gelwert nach Testmethode B bestimmt. Der Gelwert lag bei 0.

### Beispiel 6

Der Acrylathotmelt aus Beispiel 2 wurde an einen zweiten Doppelschneckenextruder der Fa. Welding Engineers übergeben (30 mm D.W.D.) Die Eintrittstemperatur des Acrylathotmelts betrug 115 °C. Im Welding Extruder wurde das Konzentrat mit 0,484 kg/h Octadecanol compoundiert. Der Extruder wurde mit einer Drehzahl von 200 Umdrehungen pro Minute bei einer spezifischen Antriebsenergie von 0,009 kWh/kg betrieben. Der Gesamtdurchsatz lag bei 20 kg/h. Die Austrittstemperatur lag bei 157 °C. Die Verweilzeit wurde durch ein folgendes Rohrleitsystem auf 4 min bei 165 °C erhöht. Zur Analyse wurde Testmethode C durchgeführt. Der Umsatz nach dem IR betrug 65 %.
Der Acrylathotmelt wurde anschließend zu einer Breitschlitzdüse weitergeleitet und dann bei einer Beschichtungstemperatur von 135 °C mit 50 g/m² auf eine mit Saran geprimerte 23 µm dicke PET-Folie beschichtet. Nach der Bestrahlung der Beschichtung wurde der Gelwert nach Testmethode B bestimmt. Der Gelwert lag bei 0.

Das erfindungsgemäße Verfahren eröffnet die Anwendung der Reaktivextrusion bei der Herstellung und bei der Funktionalisierung von Haftklebemassen auf Polyacrylatbasis. Dieses Ergebnis ist überraschend und war für den Fachmann nicht vorherzusehen. Es war nicht zu erwarten gewesen, daß Reaktionen mit niedrigen Aktivierungsenergien zu gelfreien Produkten führen. Im Gegenteil hätte der Fachmann erwartet, daß die sehr drastischen Prozeßbedingungen (Hohe Temperaturen, lange Verweilzeiten), welche für die reaktive Extrusion typisch sind, zu einer hohen Vergelung im Extruder führen würden.
So sind in die im erfindungsgemäßen Verfahren hergestellten Polyacrylate Carbonsäureanhydridgruppen, Carbonsäuregruppen, Hydroxygruppen oder dergleichen eingebaut, weiterhin sind (Meth-)Acrylatgruppen oder gegebenenfalls andere reaktive Reste als Seitenketten vorhanden. Bei den Bedingungen der Reaktivextrusion wären Nebenreaktionen, beispielsweise in Form von Umesterungsreaktionen, insbesondere solche der Polymerketten untereinander, zu erwarten gewesen. Solche Nebenreaktionen hätten eine hohe Vergelung der Polyacrylatmasse zur Folge. Wider Erwarten wurden derartige Reaktionen so gut wie nicht beobachtet, vielmehr findet bevorzugt eine Reaktion gemäß der Erfindung zwischen den funktionellen Gruppen X der Polymerketten (bevorzugt Carbonsäuregruppen, insbesondere Maleinsäureanhydridgruppen) und den funktionellen Gruppen Y der zugesetzten Monomere (bevorzugt Hydroxygruppen) statt. Hierdurch wird überraschend die Durchführung polymeranaloger Reaktionen im Extruder ermöglicht, welche aufgrund der hohen Reaktionsgeschwindigkeiten zu niedrigen Verweilzeiten im Extruder führen.
Dabei gelingt es, gelfreie Polyacrylatmassen mit einer hohen Stabilität bezüglich eines Vergelungsprozesses herzustellen ("gelfrei" bedeutet die Erfüllung der Anforderungen für eine Beschichtbarkeit der Massen mit den üblicherweise verwendeten Beschichtungsapparaturen). Aufgrund der Gelfreiheit lassen sich die Polyacrylatmassen für aus der Schmelze beschichtbare Klebemassen verwenden und somit als Haftklebemassen beispielsweise für Haftklebebänder verwenden. Die Beschichtbarkeit zeichnet sich durch ein gleichmäßiges (homogenes) Beschichtungsbild ohne Inhomogenitäten aus, wenn durch die üblicherweise verwendeten Beschichtungsdüsen (Schmelzdüsen oder Extrusionsdüsen mit einer Spaltbreite von 100 bis 500 µm, mehr bevorzugt von 150 bis 300 µm) beschichtet wird, beispielsweise auf Polyesterträger mit 50 µm Dicke. Die üblicherweise in Reaktivextrusionsverfahren hergestellten Polyacrylatmassen genügen diesen Anforderungen nicht und lassen sich nicht als Haftklebemassen einsetzen.
Durch die Wahl der Reste R der chemischen Substanzen R-Y lassen sich die Schmelzhaftklebemassen in ihren Eigenschaften modifizieren. So lassen sich gezielt für bestimmte Anwendungen Klebemassen herstellen, welche, wie oben beschrieben, gelfrei beschichtet werden können. Das erfinderische Verfahren stellt somit eine Möglichkeit dar, auf elegante Weise eine Breite Palette an Klebebändern mit Polyacrylathaftklebemassen für ein breites Anwendungsfeld zur Verfügung zu stellen.

So stellt das erfindungsgemäße Verfahren beispielsweise den Einbau von (Meth-)Acrylatgruppen in die Seitenketten von Polyacrylaten in Hotmelt-Systemen zur Verfügung. Hierdurch bietet sich der Vorteil von sehr schonenden Vernetzungsmethoden, da direkt über die eingebauten Acrylatgruppen vernetzt werden kann. Wird mit Elektronenstrahlen vernetzt, so ist die Vernetzungs-Reaktionsgeschwindigkeit sehr hoch und der Umsatz der Acrylatgruppen hoch. Somit besitzen durch das erfinderische Verfahren hergestellte und vernetzte Polyacrylathaftklebemassen kein oder nur ein sehr geringes Nachvernetzungspotential.
Im Vergleich zu nicht-funktionalisierten Polyacrylaten kann die zur optimalen Vernetzung erforderliche Dosis herabgesetzt werden, wodurch weniger Energie benötigt wird und im Fall der Elektronenstrahl-Vernetzung das Trägermaterial weniger geschädigt wird. Zudem wurde eine kohäsionssteigernde Wirkung erzielt.

Bei der Verwendung von chemischen Substanzen R-Y mit Glasübergangstemperaturen von mindestens 50 °C, beispielsweise hydroxyterminiertes Polystyrol oder PMMA, lassen sich Acrylatschmelzhaftkleber herstellen, welche zur Domänenbildung befähigt sind.
Der Einsatz von makromolekularen oder polymeren chemischen Substanzen R-Y mit Glasübergangstemperaturen von höchstens 0 °C, hier sei auswahlweise hydroxyterminierte Polyethylen/Butylen-Copolymere oder langkettige aliphatische Alkohole genannt, führt zu einer Absenkung der Polarität der Haftklebemassen.
Die Verwendung von Oligo- oder Poly(alkenylglycol)monoalkylethern wiederum führt zu gelfrei beschichtbaren Schmelzhaftklebemassen, welche durch die reaktive Extrusion mit Glycoleinheiten entlang der Polymerkette funktionalisiert werden.

Das erfinderische Verfahren bietet somit eine hohe Flexibilität bezüglich der Eigenschaften der Schmelzhaftklebemassen, es lassen sich somit für einen weiten Anwendungsbereich mit entsprechend vorteilhaft hergestellten Haftklebemassen ausgerüstete Klebebänder herstellen.

## Patentansprüche

1. Verfahren zur Herstellung von Polyacrylat-Schmelzhaftklebemassen, **gekennzeichnet durch** folgende Verfahrensschritte:
(a) Compoundierung
einer Acrylatschmelzhaftklebemasse, enthaltend zumindest eine funktionelle Gruppe X, mit einem Lösemittelgehalt von nicht mehr als 0,5 Gew.-% und einer Molekularmasse M_{w} von 100.000 bis 2.000.000 g/mol,
mit zumindest einer chemischen Substanz R-Y, enthaltend zumindest eine funktionelle Gruppe Y,
wobei die zumindest eine funktionelle Gruppen X und die zumindest eine funktionelle Gruppe Y derart gewählt sind, daß sie in der Lage sind, eine Kopplungsreaktion miteinander einzugehen,
(b) Behandlung des Compounds in einem Reaktor mit einer Vermischungsvorrichtung bei einer spezifischen Antriebsenergie von nicht mehr als 0,09 kWh/kg und bei einer Temperatur von 80 bis 200 °C,
(c) Übergabe der derart behandelten Selbsthaftklebemasse an eine nachfolgende Beschichtungseinheit sowie deren Beschichtung aus der Schmelze auf ein Trägermaterial.

2. Verfahren nach Anspruch 1, **dadurch gekennzeichnet, daß**
der Compoundierung ein Aufkonzentrationsprozeß der Acrylatschmelzhaftklebemasse vorangeht.

3. Verfahren nach zumindest einem der vorangehenden Ansprüche,m **dadurch** gekennzeichent, daß
die Compoundierung und die Behandlung in demselben Reaktor durchgeführt werden.

4. Verfahren nach zumindest einem der vorangehenden Ansprüche, **dadurch gekennzeichnet, daß**
als Reaktor ein Extruder, ein Meßkneter oder ein Compounder eingesetzt wird.

5. Verfahren nach zumindest einem der vorangehenden Ansprüche, **dadurch gekennzeichnet, daß**
die spezifische Antriebsenergie des Reaktors weniger als 0,06 kWh/kg beträgt.

6. Verfahren nach zumindest einem der vorangehenden Ansprüche, **dadurch gekennzeichnet, daß**
die Verweilzeit zwischen der Reaktion und der Beschichtung nicht größer als 10 Minuten ist.

7. Verfahren nach zumindest einem der vorangehenden Ansprüche, **gekennzeichnet durch** einen kontinuierlichen Verfahrensablauf.

8. Verfahren nach zumindest einem der vorangehenden Ansprüche, **dadurch gekennzeichnet, daß**
die Selbsthaftklebemasse nach der Beschichtung auf das Trägermaterial durch energiereiche Strahlung vernetzt wird.

9. Verfahren nach zumindest einem der vorangehenden Ansprüche, **dadurch gekennzeichnet daß**
als funktionelle Gruppe X eine Carbonsäureanhydridgruppe gewählt wird.

10. Verfahren nach zumindest einem der vorangehenden Ansprüche, **dadurch gekennzeichnet, daß**
als funktionelle Gruppe Y eine Hydroxygruppe, Alkoxygruppe, Mercaptogruppe, Thioethergruppe, Aminogruppe, Amidogruppe oder Oxazoline gewählt wird.

11. Verfahren nach zumindest einem der vorangehenden Ansprüche, **dadurch gekennzeichnet, daß**
das molare Verhältnis n_{Y}/n_{X} der Zahl n_{Y} der funktionellen Gruppen Y zu der Zahl n_{X} der funktionellen Gruppen X zwischen 0,8 und 1,2 liegt, sehr bevorzugt zwischen 0,8 und 1 liegt.

12. Verfahren nach zumindest einem der vorangehenden Ansprüche, **dadurch gekennzeichnet, daß**
eine oder mehrere chemische Substanzen R-Y vinylgruppen- und/oder (meth-)acrylatgruppenhaltige Verbindungen sind.

13. Verfahren nach zumindest einem der vorangehenden Ansprüche, **dadurch gekennzeichnet, daß**
eine oder mehrere chemische Substanzen R-Y eine statische Glasübergangstemperatur von höchstens 0 °C besitzen.

14. Verfahren nach zumindest einem der Ansprüche 1 bis 11, **dadurch gekennzeichnet, daß**
eine oder mehrere chemische Substanzen R-Y eine statische Glasübergangstemperatur von mindestens 50 °C besitzen.

15. Verfahren nach zumindest einem der vorangehenden Ansprüche, **dadurch gekennzeichnet, daß**
eine oder mehrere chemische Substanzen R-Y ein mittleres Molekulargewicht M_{w} (Gewichtsmittel) in einem Bereich von 1.000 bis 30.000 g/mol besitzen.

16. Verfahren nach zumindest einem der vorangehenden Ansprüche, **dadurch gekennzeichnet, daß**
eine oder mehrere chemische Substanzen R-Y aus der Gruppe der funktionalisierten Oligo- oder Poly(alkenylglycol)monoalkylether gewählt werden.

17. Verfahren nach zumindest einem der vorangehenden Ansprüche, **dadurch gekennzeichnet, daß**
eine oder mehrere chemische Substanzen R-Y aus einer der folgenden Gruppen gewählt werden:
- 2-Hydroxyethylacrylat, 2-Hydroxyethylmethacrylat, Hydroxypropylacrylat, Hydroxypropylmethacrylat,
- 1-Decenol, Ricinenalkyloxazolin, Sojaalkyloxazolin, Butoxymethylacrylamid, tert-Butylaminoethylmethacrylat,
- Ethylen/Butylen-Copolymnere, Ethylen/Propylen-Copolymere,
- Polystyrol, Polymethylmethacrylat,
- Poly(ethylenglycol)monomethylether, Poly(ethylenglycol)monobutylether, Poly(propylenglycol)monobutylether, Poly(propylenglycol)monomethylether
- Blockcopolymere, bevorzugt Poly(propylenglycol)-block-poly(ethylenglycol)-monoalkenylether

18. Verfahren nach zumindest einem der vorangehenden Ansprüche, **dadurch gekennzeichnet, daß**
der Acrylatschmelzhaftklebmasse im Verlauf des Verfahrens Katalysatoren, Harze, Vernetzer und/oder andere Additive zugesetzt werden.

19. Verwendung einer nach einem Verfahren gemäß zumindest einem der vorangehenden Ansprüche funktionalisierten Polyacrylat-Schmelzhaftklebemasse für ein Klebeband, wobei die Polyacrylat-Schmelzhaftklebemasse ein- oder beidseitig auf einen Träger aufgetragen ist.

## Claims

1. Process for preparing polyacrylic hotmelt pressure sensitive adhesives, **characterized by** the following steps:
(a) compounding
an acrylic hotmelt pressure sensitive adhesive containing at least one functional group X, having a solvent content of not more than 0.5% by weight and a molecular mass M_{w} of from 100 000 to 2 000 000 g/mol,
with at least one chemical substance R-Y containing at least one functional group Y,
said at least one functional group X and said at least one functional group Y being chosen such that they are capable of undergoing a coupling reaction with one another,
(b) treating the compound in a reactor with a mixing apparatus at a specific drive energy of not more than 0.09 kWh/kg and at a temperature of from 80 to 200°C,
(c) transferring the self-adhesive composition thus treated to a downstream coating unit, and applying it from the melt to a backing material.

2. Process according to Claim 1, **characterized in that** said compounding is preceded by a process of concentrating the adhesive.

3. Process according to at least one of the preceding claims, **characterized in that** said compounding and said treating are conducted in the same reactor.

4. Process according to at least one of the preceding claims, **characterized in that** said reactor is an extruder, a recording kneader apparatus or a compounder.

5. Process according to at least one of the preceding claims, **characterized in that** the specific drive energy of the reactor is less than 0.06 kWh/kg.

6. Process according to at least one of the preceding claims, **characterized in that** the residence time between reaction and coating is not more than 10 minutes.

7. Process according to at least one of the preceding claims, **characterized in that** it is continuous.

8. Process according to at least one of the preceding claims, **characterized in that** following application to the backing material the self-adhesive composition is crosslinked by means of high-energy radiation.

9. Process according to at least one of the preceding claims, **characterized in that** a carboxylic anhydride group is chosen as functional group X.

10. Process according to at least one of the preceding claims, **characterized in that** a hydroxyl group, alkoxy group, mercapto group, thioether group, amino group, amido group or oxazoline is chosen as functional group Y.

11. Process according to at least one of the preceding claims, **characterized in that** the molar ratio n_{Y}/n_{X} of the number n_{Y} of the functional groups Y to the number n_{X} of the functional groups X is between 0.8 and 1.2, very preferably between 0.8 and 1.

12. Process according to at least one of the preceding claims, **characterized in that** one or more chemical substances R-Y are compounds containing vinyl groups and/or (meth)acrylate groups.

13. Process according to at least one of the preceding claims, **characterized in that** one or more chemical substances R-Y possess a static glass transition temperature of not more than 0°C.

14. Process according to at least one of Claims 1 to 11, **characterized in that** one or more chemical substances R-Y possess a static glass transition temperature of at least 50°C.

15. Process according to at least one of the preceding claims, **characterized in that** one or more chemical substances R-Y possess an average molecular weight M_{w} (weight average) in a range from 1 000 to 30 000 g/mol.

16. Process according to at least one of the preceding claims, **characterized in that** one or more chemical substances R-Y are selected from the group consisting of functionalized oligo- and poly(alkenyl glycol) monoalkyl ethers.

17. Process according to at least one of the preceding claims, **characterized in that** one or more chemical substances R-Y are selected from one of the following groups:
- 2-hydroxyethyl acrylate, 2-hydroxyethyl methacrylate, hydroxypropyl acrylate, hydroxypropyl methacrylate,
- 1-deceriol, ricinene-alkyloxazoline, soya-alkyloxazoline, butoxymethylacrylamide, tert-butylaminoethyl methacrylate,
- ethylene/butylene copolymers, ethylene/propylene copolymers,
- polystyrene, polymethyl methacrylate,
- poly(ethylene glycol) monomethyl ether, poly(ethylene glycol) monobutyl ether, poly(propylene glycol) monobutyl ether, poly(propylene glycol) monomethyl ether
- block copolymers, preferably poly(propylene glycol)-block-poly(ethylene glycol) monoalkenyl ethers.

18. Process according to at least one of the preceding claims, **characterized in that** catalysts, resins, crosslinkers and/or other additives are added to the adhesive in the course of the process.

19. Use of a polyacrylic hotmelt pressure-sensitive adhesive functionalized by a process according to at least one of the preceding claims for an adhesive tape, said adhesive being applied to one or both sides of a backing.

## Revendications

1. Procédé pour la préparation de matières autoadhésives fusibles polyacrylate, **caractérisé par** les étapes suivantes de processus :
(a) mélange
d'une matière autoadhésive acrylate fusible comportant au moins un groupe fonctionnel X, ayant une teneur en solvant n'excédant pas 0,5 % en poids et une masse moléculaire M_{w} de 100 000 à 2 000 000 g/mole,
avec au moins une substance chimique R-Y comportant au moins un groupe fonctionnel Y, ledit au moins un groupe fonctionnel X et ledit au moins un groupe fonctionnel Y étant choisis de manière à pouvoir entrer l'un avec l'autre en une réaction de couplage,
(b) prétraitement du mélange dans un réacteur muni d'un dispositif de mélange à une énergie d'entraînement spécifique n'excédant pas 0,09 kWh/kg et à une température de 80 à 200 °C,
(c) envoi de la matière autoadhésive ainsi traitée à une unité d'enduction placée à la suite et son application à partir de la masse fondue sur un matériau de support.

2. Procédé selon la revendication 1, **caractérisé en ce qu'**un processus de concentration de la matière autoadhésive acrylate fusible précède l'opération de mélange.

3. Procédé selon au moins l'une des revendications précédentes, **caractérisé en ce que** l'opération de mélange et le traitement sont effectués dans le même réacteur.

4. Procédé selon au moins l'une des revendications précédentes, **caractérisé en ce qu'**on utilise comme réacteur une extrudeuse, un malaxeur doseur ou un mélangeur.

5. Procédé selon au moins l'une des revendications précédentes, **caractérisé en ce que** l'énergie spécifique d'entraînement du réacteur est inférieure à 0,06 kWh/kg.

6. Procédé selon au moins l'une des revendications précédentes, **caractérisé en ce que** le temps de séjour entre la réaction et l'enduction n'excède pas 10 minutes.

7. Procédé selon au moins l'une des revendications précédentes, **caractérisé par** un mode opératoire continu.

8. Procédé selon au moins l'une des revendications précédentes, **caractérisé en ce que** la matière autoadhésive est réticulée au moyen d'un rayonnement à haute énergie.

9. Procédé selon au moins l'une des revendications précédentes, **caractérisé en ce qu'**on choisit comme groupe fonctionnel X un groupe anhydride d'acide carboxylique.

10. Procédé selon au moins l'une des revendications précédentes, **caractérisé en ce qu'**on choisit comme groupe fonctionnel Y un groupe hydroxy, un groupe alcoxy, un groupe mercapto, un groupe thioéther, un groupe amino, un groupe amido ou des oxazolines.

11. Procédé selon au moins l'une des revendications précédentes, **caractérisé en ce que** le rapport molaire n_{y}/nₓ du nombre n_{y} des groupes fonctionnels Y au nombre nₓ des groupes fonctionnels X est compris entre 0,8 et 1,2, de façon particulièrement préférée entre 0,8 et 1.

12. Procédé selon au moins l'une des revendications précédentes, **caractérisé en ce qu'**une ou plusieurs substances chimiques R-Y est(sont) un(des) composé (s) contenant des groupes vinyle et/ou des groupes (méth)acrylate.

13. Procédé selon au moins l'une des revendications précédentes, **caractérisé en ce qu'**une ou plusieurs substances chimiques R-Y a(ont) une température de transition vitreuse statique d'au maximum 0 °C.

14. Procédé selon au moins l'une des revendications 1 à 11, **caractérisé en ce qu'**une ou plusieurs substances chimiques R-Y a(ont) une température de transition vitreuse statique d'au moins 50 °C.

15. Procédé selon au moins l'une des revendications précédentes, **caractérisé en ce qu'**une ou plusieurs substances chimiques R-Y a(ont) une masse moléculaire moyenne M_{w} (moyenne en poids) dans la plage de 1 000 à 30 000 g/mole.

16. Procédé selon au moins l'une des revendications précédentes, **caractérisé en ce qu'**une ou plusieurs substances chimiques R-Y est(sont) choisie(s) dans le groupe des éthers monoalkyliques d'oligo- ou de poly(alcénylglycol) fonctionnalisés.

17. Procédé selon au moins l'une des revendications précédentes, **caractérisé en ce qu'**une ou plusieurs substances chimiques R-Y est(sont) choisie(s) dans l'un des groupes suivants :
- acrylate de 2-hydroxyéthyle, méthacrylate de 2-hydroxyéthyle, acrylate d'hydroxypropyle, méthacrylate d'hydroxypropyle,
- 1-décénol, ricinénalkyloxazoline, alkyloxazoline de soja, butoxyméthylacrylamide, méthacrylate de tert-butylaminoéthyle,
- copolymères éthylène/butylène, copolymères éthylène/propylène,
- polystyrène, poly(méthacrylate de méthyle);
- éther monométhylique de polyéthylèneglycol, éther monobutylique de polyéthylèneglycol, éther monobutylique de polypropylèneglycol, éther monométhylique de polypropylèneglycol,
- copolymères séquencés, de préférence copoly(monoalcényléther de propylèneglycol/éthylèneglycol).

18. Procédé selon au moins l'une des revendications précédentes, **caractérisé en ce qu'**au cours du procédé on ajoute des catalyseurs, des résines, des agents de réticulation et/ou d'autres additifs à la matière autoadhésive acrylate fusible.

19. Utilisation d'une matière autoadhésive fusible polyacrylate fonctionnalisée selon un procédé conforme à au moins l'une des revendications précédentes, pour un ruban adhésif, la matière autoadhésive fusible polyacrylate étant appliquée d'un côté ou des deux côtés sur un support.
